# EUROPEAN PATENT APPLICATION

(11) **EP 4 644 496 A1**
(43) Date of publication of application: **05.11.2025**
(21) Application number: 23911215.4
(22) Date of filing: 05.06.2023
(51) Int. Cl.: C09D 11/324, C09D 11/326, C09D 17/00

(54) **PIGMENT DISPERSION SOLUTION AND MANUFACTURING METHOD THEREOF**

(30) Priority: 27.12.2022 JP 2022210649
(71) Applicant: DAINICHISEIKA COLOR & CHEMICALS MFG. CO., LTD., Chuo-ku Tokyo 103-8383 (JP)
(72) Inventor: YOSHIKAWA Sachio, Tokyo 103-8383 (JP); MINAMI Satoshi, Tokyo 103-8383 (JP); KOSHIKAWA Shumpei, Tokyo 103-8383 (JP); KAMABAYASHI Jun, Tokyo 103-8383 (JP); SHIMANAKA Hiroyuki, Tokyo 103-8383 (JP)
(74) Representative: Wächtershäuser & Hartz Patentanwaltspartnerschaft mbB
(86) International application number: PCT/JP2023/020852
(87) International publication number: WO 2024/142431

(57) **Abstract**

There is provided a pigment dispersion in which biomass-derived carbon black is finely dispersed at a high level, the pigment dispersion making it possible to prepare an aqueous inkjet ink that can record a high-density image having excellent color developability and glossiness and that has excellent ejection stability. The pigment dispersion is a pigment dispersion to be used for preparing an aqueous inkjet ink, the pigment dispersion containing a pigment, a dispersant, a water-soluble organic solvent, and water. The pigment is biomass-derived carbon black having a number average particle size of 80 to 300 nm in a state of being dispersed in the pigment dispersion, the dispersant is a polymer at least part of carboxy groups of which are neutralized with an alkali, the polymer contains a constituent unit (i) derived from a (meth)acrylic acid or the like and a constituent unit (ii) derived from a biomass-derived (meth)acrylate, the polymer has an acid value of 50 to 150 mgKOH/g, and the biomass-derived (meth)acrylate contains isobornyl (meth)acrylate and the like.

## Description

### Technical Field

The present invention relates to a pigment dispersion and a method for producing the same.

### Background Art

Printers and printing machines equipped with aqueous inkjet inks have been used in a wide variety of applications such as personal use, office use, business use, recording use, color display use, and color photographic use due to their high functionalization and have been studied especially as high-speed printing machines for industrial use. For monochromic printing, a black ink is usually used. For full-color printing, yellow, cyan, magenta, and black inks are usually used.

Characters, figures, and the like are basically printed with a black ink. Therefore, the black ink is used in a larger amount than the yellow, cyan, and magenta inks. In addition, even in the case of full-color printing, a cartridge for a black ink among ink cartridges installed on a printer or the like has a particularly large capacity. In recent years, various black inkjet inks have been disclosed (Patent Literatures 1 to 3).

### Citation List

### Patent Literature

Patent Literature 1: Japanese Patent Laid-Open No. 2004-10632
Patent Literature 2: Japanese Patent Laid-Open No. 2009-67831
Patent Literature 3: Japanese Translation of PCT International Application Publication No. 2009-504884

### Summary of Invention

### Technical Problem

In recent years, from the viewpoint of reduction of carbon dioxide emission, carbon recycling, carbon neutrality, and the like, there has been an active movement to replace petroleum-derived materials currently used with biomass-derived materials that enable the carbon cycle. Specifically, there is a strong demand for positive use of biomass-derived materials as materials for preparing various compositions such as paints and inks in addition to various shaped products such as films. There is also an increasing demand for the use of biomass-derived materials in aqueous inkjet inks for forming images of printed matter, and there is a significantly increasing demand for, among others, black inks, which are used in particularly large amounts.

Carbon black is usually blended as a colorant in a black ink. To prepare an environmentally friendly ink, biomass-derived carbon black is used as a colorant. However, biomass-derived carbon black has a larger particle size than petroleum-based carbon black. For this reason, it is generally difficult to prepare an ink by satisfactorily dispersing biomass-derived carbon black in a liquid medium. Therefore, there is a problem that properties such as density, color developability, and glossiness of an image recorded with a black ink prepared using such biomass-derived carbon black are not necessarily enough.

The present invention has been completed in view of such a problem of the conventional techniques, and an object of the present invention is to provide a pigment dispersion in which biomass-derived carbon black is finely dispersed at a high level, the pigment dispersion making it possible to prepare an aqueous inkjet ink that can record a high-density image having excellent color developability and glossiness and that has excellent ejection stability. Another object of the present invention is to provide a method for producing this pigment dispersion.

### Solution to Problem

Specifically, according to the present invention, a pigment dispersion described below is provided.
[1] A pigment dispersion to be used for preparing an aqueous inkjet ink, the pigment dispersion containing:
   a pigment;
   a dispersant;
   a water-soluble organic solvent; and
   water, wherein
   the pigment is biomass-derived carbon black having an average particle size of 80 to 300 nm in a state of being dispersed in the pigment dispersion,
   the dispersant is a polymer at least part of carboxy groups of which are neutralized with an alkali, the polymer comprising: a constituent unit (i) derived from at least any one of (meth)acrylic acid, itaconic acid, and an itaconic acid monoester; and a constituent unit (ii) derived from a biomass-derived (meth)acrylate,
   the polymer has an acid value of 50 to 150 mgKOH/g, a number average molecular weight of 5,000 to 20,000, and a polydispersity index (weight average molecular weight/number average molecular weight) of 2.5 or less,
   the content of the constituent unit (ii) in the polymer is 50% by mass or more, and
   the biomass-derived (meth)acrylate is at least one selected from the group consisting of isobornyl (meth)acrylate, ethyl (meth)acrylate, tetrahydrofurfuryl (meth)acrylate, dodecyl (meth)acrylate, and octadecyl (meth)acrylate.
[2] The pigment dispersion according to [1], wherein the dispersant satisfies the following requirements (1) to (3):
   [Requirement (1)]
      The dispersant is an A-B block copolymer in which the content of a constituent unit derived from a methacrylic acid-based monomer is 90% by mass or more, the A-B block copolymer containing: a polymer chain A; and a polymer chain B, and having a number average molecular weight of 5,000 to 20,000 and a polydispersity index of 1.6 or less;
   [Requirement (2)]
      The polymer chain A is a water-insoluble polymer block containing 80% by mass or more of a constituent unit (ii-a) derived from a biomass-derived methacrylate and having a number average molecular weight of 3,000 to 10,000 and a polydispersity index of 1.6 or less; and
   [Requirement (3)]
      The polymer chain B is a polymer block at least part of carboxy groups of which are neutralized with an alkali, the polymer block having an acid value of 100 to 260 mgKOH/g and a number average molecular weight of 3,000 to 10,000 and containing: a constituent unit (i-b) derived from methacrylic acid; and 40 to 90% by mass of a constituent unit (ii-b) derived from a biomass-derived methacrylate.
[3] The pigment dispersion according to [1] or [2], wherein
   the biomass-derived (meth)acrylate contains: isobornyl methacrylate; and at least one selected from the group consisting of ethyl methacrylate, tetrahydrofurfuryl methacrylate, dodecyl methacrylate, and octadecyl methacrylate, and
   the proportion of isobornyl methacrylate in all the biomass-derived (meth)acrylates is 40% by mass or more.
[4] The pigment dispersion according to any one of [1] to [3], wherein the alkali is a combination of ammonia and at least any one of sodium hydroxide and potassium hydroxide.
[5] The pigment dispersion according to any one of [1] to [4], wherein
   the content of the pigment is 10 to 30% by mass,
   the content of the dispersant is 2 to 10% by mass,
   the content of the water-soluble organic solvent is 30% by mass or less, and
   the content of water is 50 to 80% by mass.
   In addition, according to the present invention, a method for producing a pigment dispersion, described below, is provided.
[6] A method for producing a pigment dispersion to be used for preparing an aqueous inkjet ink, the pigment dispersion containing: a pigment; a dispersant; a water-soluble organic solvent; and water, wherein
   the method includes a step of dispersing a mixture comprising: biomass-derived raw material carbon black having a number average particle size of primary particles of 20 to 400 nm; the dispersant; the water-soluble organic solvent; and water,
   the pigment is biomass-derived carbon black having a number average particle size of 80 to 300 nm in a state of being dispersed in the pigment dispersion,
   the dispersant is a polymer at least part of carboxy groups of which are neutralized with an alkali, the polymer comprising: a constituent unit (i) derived from at least any one of (meth)acrylic acid, itaconic acid, and an itaconic acid monoester; and a constituent unit (ii) derived from a biomass-derived (meth)acrylate,
   the polymer has an acid value of 50 to 150 mgKOH/g, a number average molecular weight of 5,000 to 20,000, and a polydispersity index (weight average molecular weight/number average molecular weight) of 2.5 or less,
   the content of the constituent unit (ii) in the polymer is 50% by mass or more, and
   the biomass-derived (meth)acrylate is at least one selected from the group consisting of isobornyl (meth)acrylate, ethyl (meth)acrylate, tetrahydrofurfuryl (meth)acrylate, dodecyl (meth)acrylate, and octadecyl (meth)acrylate.

### Advantageous Effects of Invention

The present invention can provide a pigment dispersion in which biomass-derived carbon black is finely dispersed at a high level, the pigment dispersion making it possible to prepare an aqueous inkjet ink that can record a high-density image having excellent color developability and glossiness and that has excellent ejection stability. The present invention can also provide a method for producing this pigment dispersion.

### Description of Embodiments

### <Pigment Dispersion>

Hereinafter, embodiments of the present invention will be described, but the present invention is not limited to the following embodiments. One embodiment of a pigment dispersion of the present invention is a pigment dispersion that is used for preparing an aqueous inkjet ink and that contains a pigment, a dispersant, a water-soluble organic solvent, and water. Hereinafter, details on the pigment dispersion of the present embodiment will be described.

### (Pigment)

The pigment dispersion of the present embodiment contains a pigment in a finely dispersed state. The pigment is biomass-derived carbon black having a number average particle size of 80 to 300 nm, preferably 90 to 200 nm, in a state of being dispersed in the pigment dispersion. A "biomass-derived" material is a material obtained using living organisms, especially plants, as raw materials. The biomass-derived carbon black is conventionally known carbon black produced from biomass and is environmentally friendly carbon black that makes it possible to achieve carbon neutrality and carbon recycling, which is different from petroleum-derived carbon black.

Examples of carbon black (raw material carbon black) include: carbon black obtained by imperfect combustion or pyrolysis reaction of vegetable oil at a high temperature; carbon black (so-called lampblack) obtained by collecting smoke generated by burning vegetable oil; and carbon black obtained as vegetable black by carbonizing plants or plant seeds. Examples of the vegetable oil include palm oil, coconut oil, castor oil, rosin oil, and rape oil. Examples of the vegetable black include bincho charcoal, bamboo charcoal, ume charcoal, pine charcoal, white birch charcoal, and maple charcoal. In addition, activated carbon obtained from coconut shells can also be used. Furthermore, smoke black and black pigment made from pine soot, which are used for india ink, can also be used. Among others, carbon black obtained from inedible plants is preferably used. The carbon black may be one having a structure such as a crystalline structure, an amorphous structure, and graphite structure.

When the pigment dispersion of the present embodiment is produced, biomass-derived raw material carbon black having a number average particle size of primary particles of 20 to 40 nm is used. Dispersing, with a particular dispersant, carbon black (raw material carbon black) having a number average particle size of primary particles within the above range in a liquid medium containing a water-soluble organic solvent and water makes it possible to obtain the pigment dispersion of the present embodiment, which contains carbon black having a number average particle size of 80 to 300 nm in a dispersed state and which retains the dispersed state of the carbon black over a long period of time. The number average particle size of the primary particles of the raw material carbon black can be measured by transmission electron micrograph, scanning electron micrograph, X-ray diffraction, or the like. The carbon black may be acidic carbon black whose surface is modified by a carboxy group, or the surface of the carbon black may be modified by a hydroxy group, a phenolic hydroxy group, a ketone group, or the like. Hereinafter, the biomass-derived carbon black will also be referred to as "biomass carbon black."

The pigment dispersion of the present embodiment may further contain a pigment (additional pigment) other than the above biomass-derived carbon black. Examples of the additional pigment include carbon black derived from a petroleum material. When the pigment dispersion of the present embodiment contains carbon black derived from a petroleum material, thereby it is expected that the functions of the biomass-derived carbon black are complemented. The proportion of the carbon black derived from a petroleum material in the whole pigment is preferably 80% by mass or less, more preferably 50% by mass or less. Note that preferably, the pigment dispersion is substantially free of carbon black derived from a petroleum material.

### (Dispersant)

The dispersant is a component for dispersing the pigment in the liquid medium containing a water-soluble organic solvent and water and is a polymer at least part of carboxy groups of which are neutralized with an alkali, the polymer containing: a constituent unit (i) derived from at least any one of (meth)acrylic acid, itaconic acid, and an itaconic acid monoester; and a constituent unit (ii) derived from a biomass-derived (meth)acrylate.

The polymer contains the constituent unit (i), and therefore carboxy groups are introduced into the structure thereof. The polymer has an acid value of 50 to 150 mgKOH/g, preferably 70 to 200 mgKOH/g. When the acid value is lower than 50 mgKOH/g, the polymer is not dissolved in water even if the carboxy groups are neutralized for ionization, so that the polymer does not exhibit its performance as a dispersant in an aqueous pigment dispersion or ink. On the other hand, when the acid value is higher than 150 mgKOH/g, parts that dissolve in water increase, so that the viscosity of the pigment dispersion may increase excessively, or the water solubility of the polymer may be too high. Therefore, even when the polymer is adsorbed onto the pigment, the polymer may be liable to be desorbed, and the water resistance of an image to be recorded may deteriorate because the carboxy groups, which are hydrophilic, are excessive.

At least part of the carboxy groups in the polymer are neutralized with an alkali resulting in ionization to show the action of dissolving the polymer (dispersant) in water. The monomer that forms the constituent unit (i) is at least any one of (meth)acrylic acid, itaconic acid, and an itaconic acid monoester. Examples of the itaconic acid monoester include itaconic acid monomethyl ester and itaconic acid monoethyl ester.

The monomer that forms the constituent unit (ii) is a biomass-derived (meth)acrylate. The biomass-derived (meth)acrylate is at least one selected from the group consisting of isobornyl (meth)acrylate, ethyl (meth)acrylate, tetrahydrofurfuryl (meth)acrylate, dodecyl (meth)acrylate, and octadecyl (meth)acrylate. The isobornyl group is a hydrophobic cycloalkyl group having a large carbon number. The dodecyl group and the octadecyl group are highly hydrophobic/oleophilic long-chain alkyl groups. The isobornyl group, the dodecyl group, and the octadecyl group are considered to act as an adsorbent group to be adsorbed onto the biomass carbon. The tetrahydrofurfuryl group is a cyclic ether group having a relatively small carbon number. The ethyl group is an alkyl group having a relatively small carbon number. The tetrahydrofurfuryl group and the ethyl group are considered to show the action of adjusting the water solubility of the dispersant to water.

The biomass-derived (meth)acrylate is a monomer obtained using, for example, a plant-derived alcohol. The pigment dispersion of the present embodiment is a dispersion in which biomass-derived materials are used in large amounts, the dispersion containing: the biomass carbon black; and the dispersant formed with a biomass-derived monomer. For this reason, an image recorded with an ink prepared using the pigment dispersion of the present embodiment contains a biomass-derived film and therefore is one that is further environmentally friendly in terms of carbon neutrality and carbon recycling.

The isobornyl (meth)acrylate is an esterified product obtained using isoborneol as an alcohol. This isoborneol is a plant-derived alcohol obtained from camphene that is obtained from pine resin or the like. The ethyl (meth)acrylate is an esterified product obtained using ethanol as an alcohol. This ethanol is an alcohol obtained by fermenting biomass such as sugar cane, corn, and wood. The tetrahydrofurfuryl (meth)acrylate is an esterified product of tetrahydrofurfuranol. This tetrahydrofurfuranol is an alcohol industrially obtained through a catalytic hydrogenation reaction of furfural contained in cobs of corn and bagasse of sugar cane. The dodecyl (meth)acrylate and the octadecyl (meth)acrylate are esterified products of dodecyl alcohol and octadecyl alcohol respectively. The dodecyl alcohol and the octadecyl alcohol are alcohols obtained from coconut oil and palm oil.

The content of the constituent unit (ii) in the polymer (dispersant) is 50% by mass or more, preferably 80 to 95% by mass. When the content of the constituent unit (ii) is 50% by mass or more, thereby the polymer can be used as an environmentally friendly dispersant, and images and printed matter recorded with an ink containing this polymer as a dispersant can be made into environmentally friendly images and the like.

The biomass-derived (meth)acrylate preferably contains: isobornyl methacrylate; and at least one selected from the group consisting of ethyl methacrylate, tetrahydrofurfuryl methacrylate, dodecyl methacrylate, and octadecyl methacrylate. The proportion of isobornyl methacrylate in all the biomass-derived (meth)acrylates is preferably 40% by mass or more, more preferably 45 to 70% by mass. The use of the methacrylates as biomass-derived (meth)acrylates makes it possible to set the glass transition temperature of a resulting polymer to be high and also makes it possible to improve hydrolysis resistance of the polymer. In addition, when the proportion of isobornyl methacrylate in all the biomass-derived (meth)acrylates is set to 40% by mass or more, thereby a large number of highly hydrophobic groups are introduced into the polymer, so that the adsorptivity onto the pigment can be improved. The biomass-derived (meth)acrylate preferably contains: isobornyl methacrylate; and at least any one of ethyl methacrylate and tetrahydrofurfuryl methacrylate among others.

A biomass-derived (meth)acrylate can be distinguished from a methacrylate derived from a petroleum material. Moreover, compounds derived from petroleum materials do not contain carbon 14 (¹⁴C), which is one of the carbon isotopes. On the other hand, biomass-derived materials, among others plant-derived compounds, contain carbon 14 (¹⁴C). Therefore, whether a (meth)acrylate is a biomass-derived (meth)acrylate or not can be determined by whether carbon 14 (14C) is present or not. Examples of the method for measuring ¹⁴C include a beta ray measurement method and an accelerator mass spectrometry (AMS) method. For environmental materials in particular, ¹⁴C measurement methods are also specified in the biobased content testing standard ASTM D6866, European standard CEN 16137, ISO international standard ISO 16620-2, and the like.

The polymer to be used as the dispersant may further contain an additional constituent unit other than the constituent unit (i) and the constituent unit (ii). Examples of the additional constituent unit include a constituent unit derived from a radically polymerizable monomer (additional monomer) derived from a petroleum material. Examples of the additional monomer include: vinyl-based monomers such as styrene and vinyltoluene; and (meth)acrylic acid-based monomers. Examples of the (meth)acrylic acid-based monomers include monofunctional (meth)acrylates having a substituent such as methyl, ethyl, propyl, butyl, hexyl, 2-ethylhexyl, octyl, decyl, dodecyl, tridecyl, hexadecyl, octadecyl, isostearyl, behenyl, cyclohexyl, trimethylcyclohexyl, t-butylcyclohexyl, benzyl, methoxyethyl, butoxyethyl, phenoxyethyl, nonylphenoxyethyl, isobornyl, dicyclopentanyl, dicyclopentenyl, dicyclopentenyloxyethyl, glycidyl, 2-hydroxyethyl, 2-hydroxypropyl, 4-hydroxybutyl, dimethylaminoethyl, diethylaminoethyl, polyethylene glycol, polypropylene glycol, polyethylene glycol monomethyl ether, polypropylene glycol monomethyl ether, poly-ε-caprolactone, or polydimethylsiloxane. Among others, a monomer having a polyalkylene glycol chain is preferred because the polyalkylene glycol chain has biodegradability, which makes the monomer environmentally compatible. Note that preferably, the polymer to be used as the dispersant substantially consists of the above constituent units (i) and (ii).

The polymer that is the dispersant has a number average molecular weight (Mn) of 5,000 to 20,000, preferably 6,000 to 18,000, more preferably 7,000 to 15,000. When Mn of the polymer is lower than 5,000, the polymer is liable to be desorbed from the pigment, which deteriorates the dispersion stability of the pigment. On the other hand, when Mn of the polymer is higher than 20,000, the viscosity of the pigment dispersion may be too high, and the particles of the pigment may be liable to be adsorbed onto each other, which may cause aggregation. Note that each of the number average molecular weight (Mn) and the weight average molecular weight (Mw) herein is a value in terms of polystyrene, measured by gel permeation chromatography (GPC).

The polymer that is the dispersant has a polydispersity index (PDI = weight average molecular weight (Mw)/number average molecular weight (Mn)) of 2.5 or less, preferably 2.0 or less, more preferably 1.6 or less. When the polydispersity index (PDI) of the polymer is more than 2.5, the dispersibility of the pigment deteriorates. By means of living radical polymerization, the molecular weights of the polymer to be obtained can be made uniform and the structures thereof can be controlled. It is preferred to make the molecular weights of the polymer uniform because thereby high-molecular-weight polymers and low-molecular-weight polymers decrease, and a large number of polymer chains that contribute to the dispersibility of the pigment are contained.

The dispersant is a polymer at least part of the carboxy groups derived from (meth)acrylic acid, itaconic acid, or the like are neutralized with an alkali. Since at least part of the carboxy groups are neutralized and ionized, this polymer has affinity to water and easily dissolves in water.

Examples of the alkali include: ammonia; organic amines such as triethylamine, dimethylaminoethanol, diethanolamine, triethanolamine, aminomethyl propanol, and polyethylene glycol polypropylene glycol monoamine; biomass-derived organic monoamines such as coconut amine, octylamine, dodecylamine, stearylamine, oleylamine, and dimethyloctylamine; and alkali metal hydroxides such as lithium hydroxide, sodium hydroxide, and potassium hydroxide. Among others, the alkali is preferably a combination of ammonia and at least any one of sodium hydroxide and potassium hydroxide. When the polymer is neutralized with ammonia, the ammonia volatilizes after recording, which produces the original carboxy groups, so that the water resistance of an image can be improved. When the polymer is neutralized with sodium hydroxide or potassium hydroxide, the carboxy groups have an ionic character, therefore the polymer easily dissolves in water, and the drying resistance and redissolvability of an ink can be improved.

The polymer to be used as the dispersant can be produced by a conventionally known method. Specifically, the dispersant is preferably synthesized by solution polymerization using a water-soluble organic solvent to be contained in the pigment dispersion. For example, monomers are charged by dropping or all at once into a water-soluble organic solvent, and then polymerization is performed using an azo-based polymerization initiator or a peroxide-based polymerization initiator. During the polymerization, a chain transfer agent such as a thiol or a (bromomethyl)acrylic acid ester may be used together with the monomers in order to adjust the molecular weight of a polymer to be obtained. In addition, the polymer may be synthesized by a living radical polymerization method in order to make the molecular weight of a polymer to be obtained uniform. Examples of the living radical polymerization include: an Atom Transfer Radical Polymerization method; an NMP method using nitroxide or the like; a Reversible Addition-Fragmentation Chain Transfer Polymerization method using a thioester, thiocarbonate, or the like; a TERP method using organotellurium as an initiator; an Iodine Transfer Polymerization method using an iodine compound as an initiator; a Reversible Chain Transfer Catalyzed Polymerization method and a Reversible Complexation Mediated Polymerization method, using an inorganic or organic catalyst; and a Chain Transfer Polymerization method using a cobalt catalyst or the like.

The dispersant preferably satisfies the following requirements (1) to (3).

### [Requirement (1)]

The dispersant is an A-B block copolymer in which the content of a constituent unit derived from a methacrylic acid-based monomer is 90% by mass or more, the A-B block copolymer containing: a polymer chain A; and a polymer chain B, and having a number average molecular weight of 5,000 to 20,000 and a polydispersity index of 1.6 or less.

### [Requirement (2)]

The polymer chain A is a water-insoluble polymer block containing 80% by mass or more of a constituent unit (ii-a) derived from a biomass-derived methacrylate and having a number average molecular weight of 3,000 to 10,000 and a polydispersity index of 1.6 or less.

### [Requirement (3)]

The polymer chain B is a polymer block at least part of carboxy groups of which are neutralized with an alkali, the polymer block having an acid value of 100 to 260 mgKOH/g and a number average molecular weight of 3,000 to 10,000 and containing: a constituent unit (i-b) derived from methacrylic acid; and 40 to 90% by mass of a constituent unit (ii-b) derived from a biomass-derived methacrylate.

This dispersant is an A-B block copolymer containing a polymer chain A (hereinafter, also referred to as "chain A") and a polymer chain B (hereinafter, also referred to as "chain B"). The chain A is a water-insoluble polymer block. The chain B is a water-soluble polymer block at least part of the carboxy groups of which are neutralized with an alkali, the water-soluble polymer block containing a constituent unit (i-b) derived from methacrylic acid. Since the chain A is a water-insoluble polymer block, the chain A has high hydrophobicity, so that hydrophobic interaction is likely to occur between the chain A and the water-insoluble pigment. Therefore, the chain A is adsorbed or deposited onto the pigment by hydrogen bonding or the like, making it possible to encapsulate the pigment. In addition, since the chain A has a high molecular weight, it is hardly desorbed from the pigment. The chain A is adsorbed onto the pigment, while the chain B dissolves in water, so that finely dispersed pigments cause steric repulsion, and therefore a finely dispersed state is retained over a long period of time. In addition, the amount of the dispersant separated or dissolved into the liquid medium is small, or even if the dispersant is separated into the liquid medium, the chain A forms a particle because of its water insolubility, and therefore the ejection stability of an ink can be improved, making it possible to provide an ink suitable for high-speed printing.

The chain B is a water-soluble polymer block. Since the dispersant is adsorbed onto the pigment, the dispersant is unlikely to be desorbed from the pigment onto which the dispersant is adsorbed even when an ink containing this dispersant dries in a recording head or the like. For this reason, the pigments hardly aggregate, or desorbed dispersants hardly form a film, and therefore the ink has excellent redissolvability, which makes it possible to make the dried ink back into the dispersion state easily by adding an aqueous liquid medium.

### [Requirement (1)]

The dispersant is an A-B block copolymer in which the content of a constituent unit derived from a methacrylic acid-based monomer is 90% by mass or more, the A-B block copolymer containing a polymer chain A and a polymer chain B. Examples of the methacrylic acid-based monomer include methacrylic acid, and methacrylates as esterified products of methacrylic acid. The A-B block copolymer is a polymer whose structure is precisely controlled and can be produced by living polymerization, among others living radical polymerization. It is preferred to produce the A-B block copolymer by living radical polymerization using an organic iodide as an initiator and an organic compound as a catalyst because environmentally friendly materials can be used, and the degree of freedom for designing the polymer is high. In the living radical polymerization using an organic iodide, an iodine atom that is a terminal growth group is preferably bonded to a tertiary carbon atom, and therefore in the A-B block copolymer, the content of the constituent unit derived from a methacrylic acid-based monomer is 90% by mass or more. In addition, when the content of the constituent unit derived from a methacrylic acid-based monomer is large, the glass transition point of the A-B block copolymer is high, and therefore thermal characteristics such as heat resistance are improved, so that an image without tackiness can be recorded. Furthermore, methacrylic acid-based monomers have higher hydrolysis resistance than acrylic acid-based monomers such as acrylic acid esters and therefore are unlikely to hydrolyze even in an aqueous liquid medium and relatively stable. Above all, the content of the constituent unit derived from a methacrylic acid-based monomer in the A-B block copolymer is preferably 100% by mass.

Methacrylic acid and the biomass-derived methacrylate are preferably used as the methacrylic acid-based monomer. In particular, as described above, the biomass-derived (meth)acrylate preferably contains: isobornyl acrylate; and at least one selected from the group consisting of ethyl methacrylate, tetrahydrofurfuryl methacrylate, dodecyl methacrylate, and octadecyl methacrylate. In addition, the proportion of isobornyl methacrylate in all the biomass-derived (meth)acrylates is preferably 40% by mass or more.

Mn of the A-B block copolymer is 5,000 to 20,000, preferably 7,000 to 15,000. When Mn of the A-B block copolymer is lower than 5,000, the A-B block copolymer may be liable to be desorbed from the pigment. On the other hand, when Mn of the A-B block copolymer is higher than 20,000, the viscosity during polymerization may increase excessively, or the viscosity of the pigment dispersion may increase excessively.

The polydispersity index (PDI) of the A-B block copolymer is 1.6 or less, preferably 1.5 or less. When PDI of the A-B block copolymer is more than 1.6, the A-B block copolymer whose Mn is out of the above range is contained in a large amount, which makes the dispersibility of the pigment somewhat deficient.

### [Requirement (2)]

The polymer chain A is a water-insoluble polymer block containing 80% by mass or more of a constituent unit (ii-a) derived from a biomass-derived methacrylate and having a number average molecular weight of 3,000 to 10,000 and a polydispersity index of 1.6 or less. Specifically, the chain A is a polymer block that is adsorbed and deposited onto the pigment, thereby making it possible to encapsulate the pigment.

In the chain A, the content of the constituent unit (ii-a) derived from a biomass-derived methacrylate is 80% by mass or more, preferably 90% by mass or more. When the content of the constituent unit (ii-a) in the chain A is less than 80% by mass, the environmental friendliness may be somewhat deficient. In addition, the chain A may further contain a constituent unit derived from a methacrylate derived from a petroleum raw material as long as the content of the constituent unit (ii-a) is 80% by mass or more. Furthermore, the chain A may contain a constituent unit derived from methacrylic acid in an amount of, for example, about 0.5 to about 5% by mass as long as the chain A is a water-insoluble polymer block.

Mn of the chain A is 3,000 to 10,000, preferably 4,000 to 8,000. The chain A has a high molecular weight to a certain extent and therefore is likely to be adsorbed and deposited onto the pigment, thereby making it possible to encapsulate the pigment. When Mn of the chain A is lower than 3,000, the chain A is liable to dissolve into a liquid medium such as a water-soluble organic solvent, so that the chain A may be liable to be desorbed from the pigment. On the other hand, when Mn of the chain A is higher than 10,000, the water insolubility may be too high, and therefore it is sometimes the case that the chain A is unlikely to be adsorbed onto the pigment.

The polydispersity index (PDI) of the chain A is 1.6 or less, preferably 1.5 or less. When PDI of the chain A is more than 1.6, a large number of polymer blocks whose Mn is out of the above range are contained, which may make it somewhat difficult to enhance the dispersibility of the pigment.

### [Requirement (3)]

The polymer chain B is a polymer block containing: a constituent unit (i-b) derived from methacrylic acid; and 40 to 90% by mass of a constituent unit (ii-b) derived from a biomass-derived methacrylate. In addition, the polymer chain B is a water-soluble polymer block at least part of the carboxy groups is neutralized with an alkali, the water-soluble polymer block having an acid value of 100 to 260 mgKOH/g and a number average molecular weight of 3,000 to 10,000, that is, the polymer chain B is a water-soluble polymer block that dissolves in water by ionization.

The acid value of the chain B is 100 to 260 mgKOH/g, preferably 70 to 200 mgKOH/g. When the acid value is within this range, thereby a polymer block that dissolves in water by neutralization of at least part of the carboxy groups can be prepared. When the acid value of the chain B is lower than 100 mgKOH/g, a large number of highly hydrophobic groups such as isobornyl groups are contained in the chain B, and therefore it is sometimes the case that the chain B cannot be dissolved in water even by neutralization. On the other hand, when the acid value of the chain B is higher than 260 mgKOH/g, the hydrophilicity may be too high. Therefore, the water resistance of an image (dried film) to be recorded may be liable to deteriorate, and the content of the constituent unit derived from a biomass-derived methacrylate decreases relatively and therefore the environmental compatibility may somewhat deteriorate.

Even when an ink containing the A-B block copolymer as a dispersant dries, the chain B dissolves in water, which thereby makes it possible to make the dried ink back into the dispersion state easily by adding an aqueous liquid medium. Note that the water-insoluble chain A is adsorbed and deposited onto the pigment and therefore is unlikely to be desorbed from the pigment even when the ink dries, which makes it possible to make the dried ink back into a satisfactory dispersion state.

In the chain B, the content of the constituent unit (ii-b) derived from a biomass-derived methacrylate is 40 to 90% by mass, preferably 50 to 80% by mass. Therefore, the A-B block copolymer is an environmentally friendly dispersant.

Mn of the chain B is 3,000 to 10,000, preferably 4,000 to 8,000. The "number average molecular weight (Mn) of chain B" herein is a "value obtained by subtracting the number average molecular wight (Mn) of the chain A from the number average molecular weight (Mn) of the A-B block copolymer as a whole." When Mn of the chain B is lower than 3,000, the water solubility of the chain B may be somewhat deficient, and the dispersion stability of the pigment may be insufficient. On the other hand, when Mn of the chain B is higher than 10,000, the polymer as a whole easily dissolves in water even when the chain A is adsorbed onto the pigment, so that the polymer may be liable to be desorbed, and the viscosity of the pigment dispersion may increase excessively.

The chain B is a water-soluble polymer block that dissolves in water when at least part of the carboxy groups thereof are neutralized and ionized with an alkali. As the alkali, the above-described ammonia, organic amines, alkali metal hydroxides, and the like can be used. All of the carboxy groups may be neutralized with an alkali, or part of the carboxy groups may be neutralized in a range where the chain B is dissolvable in water.

The A-B block copolymer can be produced according to a conventionally known method. For example, the A-B block copolymer can be produced by living anionic polymerization, living cationic polymerization, or living radical polymerization. The A-B block copolymer is preferably produced by living radical polymerization among others from the viewpoint of conditions, materials, apparatus, and the like.

The living radical polymerization include atom transfer radical polymerization (ATRP method), nitroxide-mediated radical polymerization (NMP method), reversible addition-fragmentation chain transfer polymerization (RAFT method), organotellurium-mediated living radical polymerization (TERP method), reversible chain transfer catalyzed polymerization (RTCP method), and reversible complexation mediated polymerization (RCMP method). Among others, the RTCP method and the RCMP method each using an organic iodide as an initiator and an organic compound as a catalyst are advantageous not only in terms of cost because a heavy metal and a special compound are unnecessary but also in terms of simplicity of purification and treatment.

The RTCP method and the RCMP method are preferred because an iodine atom that is a terminal growth group is bonded to a tertiary carbon atom, and therefore stabilized radicals are likely to be generated, so that the A-B block copolymer having particular block structures can be produced precisely and easily with general facilities. For this reason, the content of the constituent unit derived from a methacrylic acid monomer in the A-B block copolymer is preferably 90% by mass or more.

The A-B block copolymer may be produced by any of the polymerization forms of solventless polymerization, solution polymerization, emulsion polymerization, and the like. Among others, solution polymerization in an organic solvent is preferably performed, and solution polymerization in the same organic solvent as the water-soluble organic solvent to be blended in the pigment dispersion is more preferably performed. Thereby, the A-B block copolymer can be used as it is for the pigment dispersion without taking out the A-B block copolymer. The above RTCP method and RCMP method can be performed in a water-soluble organic solvent to be used for the pigment dispersion.

Any of the polymer blocks of the chain A and the chain B may be first formed by polymerization. The chain B is preferably formed by polymerization after the chain A is formed by polymerization. In the case where chain B is first formed by polymerization, if the polymerization rate is less than 100%, the constituent unit derived from a residual monomer may be introduced into the chain A that is formed later by polymerization. In this case, a large amount of methacrylic acid that is a constituent of the chain B is introduced into the chain A, and therefore there is a possibility that the chain A easily dissolves in water.

### (Dispersion Medium)

The pigment dispersion of the present embodiment contains a liquid medium containing water and a water-soluble organic solvent as media for dispersing the pigment. As the water, ion-exchanged water, distilled water, purified water, and the like is preferably used. As the water-soluble organic solvent, an alcoholic-based solvent, a glycol-based solvent, a glycol ether, an amide-based solvent, a carbonate-based solvent, and other polar solvents can be used.

Examples of the alcohol-based solvent include methanol, ethanol, isopropanol, propyl alcohol, butanol, and isobutanol. Examples of the glycol-based solvent include ethylene glycol, propylene glycol, and glycerol. Examples of the glycol ether include diethylene glycol, triethylene glycol, tetraethylene glycol, dipropylene glycol, tripropylene glycol, ethylene glycol monobutyl ether, triethylene glycol monobutyl ether, tetraethylene glycol monobutyl ether, propylene glycol monomethyl ether, dipropylene glycol monomethyl ether, tripropylene glycol monomethyl ether, diethylene glycol dimethyl ether, diethylene glycol diethyl ether, dipropylene glycol dimethyl ether, 1,3-butane glycol, and 3-methoxy-3-methyl-1-butanol.

Examples of the amide-based solvent include dimethylformamide, dimethylacetamide, pyrrolidone, N-methylpyrrolidone, 3-methoxy-N,N-dimethylpropanamide, and 3-butoxy-N,N-dimethylpropanamide. Examples of the carbonate-based solvent include ethylene carbonate, propylene carbonate, and dimethyl carbonate. Examples of other polar solvents include dimethyl sulfoxide, tetramethyl urea, and dimethyl imidazolidinone.

As the water-soluble organic solvent, a biomass-derived solvent, a recycled solvent, a biodegradable solvent, a green solvent, and the like are preferably used. Specific examples thereof include: ethanol obtained by saccharifying a sugar cane, corn, a cellulose material, or the like; 1,3-butanediol and glycerol that are extracts from natural products; biodegradable 3-methoxy-3-methyl-1-butanol; and ethylene glycol and propylene glycol that are recycled solvents from various materials such as plastic products, and derivatives thereof.

The dispersant is preferably produced by solution polymerization in which a water-soluble organic solvent to be contained in the pigment dispersion or an aqueous inkjet ink is used. The use of the water-soluble organic solvent as a polymerization solvent makes it possible to prepare the pigment dispersion using a polymer solution to be obtained by polymerization as it is and therefore makes it possible to simplify the processes.

### (Other Additives)

Other additives can be contained as necessary in the pigment dispersion of the present embodiment. Examples of other additives include an alkali for adjusting pH, a surfactant, an antiseptic, and a binder component for an aqueous inkjet ink.

As the alkali, the above-described alkalis can be used. When the pigment dispersion of the present embodiment contains a surfactant, thereby the surface tension of the pigment dispersion or an ink can be maintained in a predetermined range. Examples of the surfactant include silicone-based, acetylene glycol-based, fluorine-based, alkylene oxide-based, and hydrocarbon-based surfactants. In the surfactant, a nature-derived or biomass-derived material is preferably used. For example, polyalkylene glycol ester-based and polyalkylene glycol ether-based surfactants using aliphatic acids and aliphatic alcohols of palm oil, coconut oil, and the like are preferred in terms of the environment. Generally, a surfactant may cause foaming of an ink or repelling of an ink on the surface of a film. In addition, the addition of a surfactant may be liable to cause aggregation of pigments, and therefore it is preferred to control the addition amount of the surfactant appropriately.

Examples of the antiseptic include sodium benzoate, benzimidazole, thiabendazole, potassium sorbate, sodium sorbate, sodium dehydroacetate, thiazosulfamide, and pyridine thiol oxide.

In the pigment dispersion, a binder component for an aqueous inkjet ink may be contained in advance. An ink containing a binder component is useful as an ink for recording an image on paper such as, for example, plain paper, photographic printing paper, photo glossy paper, and matte paper. It is preferred that a binder component that is a film-forming component be further contained in inks for recording images on nonabsorbent recording media such as plastic films, plastic-shaped articles, textiles, cloths, metals, and ceramics. When an ink containing a film-forming component is used, thereby the film-forming component forms a film, making it possible to improve the adhesion, dry rub resistance, wet rub resistance, blocking resistance, chemical resistance, solvent resistance, rub resistance, and the like of an image (dried film) to be recorded.

As the binder component, polymers such as acrylic polymers, styrene/acrylic polymers, urethane-based polymers, polyester-based polymers, and polyolefin-based polymers can be used. These polymers can be used in the forms of an aqueous solution, a water dispersion, and an emulsion.

The acrylic polymers and styrene/acrylic polymers can be emulsions obtained by polymerizing styrene and acrylic acid-based monomers such as methacrylates in the presence of a surfactant, the emulsions having a dispersed particle size (number average particle size) of 50 to 200 nm. These polymers are preferably A-B block copolymers or A-B-A block copolymers having a water-insoluble chain A and a water-soluble chain B. The monomer components that form these polymers preferably contain a biomass-derived (meth)acrylate.

The urethane-based polymers can be water dispersions obtained in such a way that diisocyanates, polyols, short-chain diols, and diol monocarboxylic acids, and the like are reacted; if necessary, the chains are extended by reacting hydrazine, isophorone diamine, or the like; and then the resulting product is self-emulsified with alkaline water, the water dispersions having a dispersed particle size (number average particle size) of 50 to 200 nm. As the diisocyanates, isophorone diisocyanate and hexamethylene diisocyanate, and besides, natural material-derived lysine diisocyanate, pentamethylene diisocyanate, and the like are preferred. As the polyols, polycarbonate diols, and besides, castor oil polyols that are natural materials, and the like are preferred. As the short-chain diols, diethylene glycol, and besides, natural material-derived ethylene glycol, 1,3-propanediol, and isosorbide, and the like are preferred. As the diol monocarboxylic acids, dimethylol propionic acid and the like are preferred.

The polyester-based polymers can be water dispersions obtained in such a way that dibasic acids such as adipic acid and phthalic acid, diols such as ethylene glycol, propylene glycol, neopentyl glycol, and cyclohexane dimethanol, and monomers having a sulfonate group, such as dimethyl sulfoisophthalate sodium salt, are subjected to dehydration or dealcoholization to form polyesters, and then water is added under forced stirring.

The polyolefin-based polymers can be water dispersions obtained in such a way that acrylic acid copolymers of polyethylene or polypropylene, grafted products of maleic acid, or the like are dissolved in organic solvents; an aqueous alkali solution is then added thereto under forced stirring to make a water dispersion; and further, the water dispersion is subjected to processing of removing the organic solvent.

Other additives such as an organic solvent other than the above water-soluble organic solvent, a levelling agent, a surface tension modifier, an ultraviolet absorber, a light stabilizer, an antioxidant, a dye, a filler, wax, a thickener, a defoamer, an antifungal agent, an antistatic agent, metal fine particles, and a magnetic powder can be further contained as necessary in the pigment dispersion.

### (Pigment Dispersion)

The pigment dispersion of the present embodiment can be prepared as described above by dispersing biomass carbon black (raw material carbon black) having a number average particle size of primary particles of 20 to 400 nm in a dispersion medium with a particular dispersant. Even when the above raw material carbon black having a relatively large number average particle size of primary particles is used, the pigment dispersion containing biomass carbon black having a number average particle size of 80 to 300 nm in a dispersed state can be obtained by mechanically (physically) dispersing the raw material carbon black with a particular dispersant.

When the biomass carbon black in a dispersed state has a number average particle size of 80 to 300 nm, preferably 85 to 130 nm, thereby it is made possible to provide a pigment dispersion making it possible to prepare an aqueous inkjet ink that can record a high-density image having excellent color developability and glossiness and that has excellent stability of ejection by an inkjet process can be prepared. When the number average particle size (dispersed particle size) of the biomass carbon black in the pigment dispersion is smaller than 80 nm, the optical density (degree of blackness) and color developability of recorded images are deficient. On the other hand, when the number average particle size (dispersed particle size) of the biomass carbon black in the pigment dispersion is larger than 300 nm, clogging is liable to occur in recording heads, and the optical density (degree of blackness), color developability, and glossiness of recorded images are deficient. The number average particle size of the dispersed particles (biomass carbon black) in the pigment dispersion can be measured using a dynamic light scattering particle size distribution analyzer.

The content of the pigment in the pigment dispersion is preferably 10 to 30% by mass, more preferably 12 to 25% by mass. In addition, the content of water in the pigment dispersion is preferably 50 to 80% by mass, more preferably 55 to 75% by mass.

The content of the water-soluble organic solvent in the pigment dispersion is preferably 30% by mass or less, more preferably 0.5 to 20% by mass. When the content of the water-soluble organic solvent is more than 30% by mass, an image recorded with an ink prepared using this pigment dispersion may be difficult to dry.

The content of the dispersant in the pigment dispersion is preferably 2 to 10% by mass, more preferably 3 to 8% by mass. When the content of the dispersant is less than 2% by mass, it may be somewhat difficult to disperse the pigment stably. On the other hand, when the content of the dispersant is more than 10% by mass, the viscosity may be too high, and the ink shows non-Newtonian viscosity, so that it may be somewhat difficult to eject the ink linearly by an inkjet system.

The content of the dispersant in the pigment dispersion is also preferably set according to the type, surface characteristics, particle size, and the like of the pigment. Specifically, the content of the dispersant in the pigment dispersion is preferably set to 5 to 50 parts by mass, more preferably 10 to 30 parts by mass, based on 100 parts by mass of the pigment.

The content of the alkali in the pigment dispersion is preferably set so that the content of the alkali in an ink to be prepared will be 0.5 to 5% by mass. The content of the antiseptic in the pigment dispersion is preferably set so that the content of the antiseptic in an ink to be prepared will be 0.05 to 2.0% by mass, more preferably 0.1 to 1.0% by mass. The content of the binder component in the pigment dispersion is preferably set so that the content of the binder component in an ink to be prepared will be 10 to 200 parts by mass, more preferably 20 to 150 parts by mass, based on 100 parts of the pigment.

The viscosity of the pigment dispersion can be appropriately set according to the viscosity or the like of an ink to be prepared. The viscosity of the pigment dispersion at 25°C is preferably 2.5 to 20 mPa·s, more preferably 2.6 to 10 mPa·s.

The surface tension of the pigment dispersion at 25°C is preferably 15 to 45 mN/m, more preferably 20 to 40 mN/m. The surface tension of the pigment dispersion can be adjusted by, for example, the type and amount of the water-soluble organic solvent or addition of a surfactant or the like.

The pH of the pigment dispersion at 25°C is preferably 7.0 to 10, more preferably 8.0 to 9.5. Since the dispersant is neutralized with an alkali, the dispersant may precipitate, and the pigments may be aggregated if the pigment dispersion is acidic.

### <Method for Producing Pigment Dispersion>

The above-described pigment dispersion can be produced according to the following method. Specifically, one embodiment of a method for producing a pigment dispersion of the present invention is a method for producing a pigment dispersion to be used for preparing an aqueous inkjet ink, the pigment dispersion containing: a pigment; a dispersant; a water-soluble organic solvent, and water, and includes a step (dispersion step) of dispersing a mixture containing: biomass-derived raw material carbon black having a number average particle size of primary particles of 20 to 400 nm, preferably 25 to 200 nm; the dispersant; the water-soluble organic solvent; and water.

In the dispersion step, a mixture is first prepared by mixing raw material carbon black (pigment), a dispersant, water, and a water-soluble organic solvent. Then, the mixture is dispersed using a paint shaker, a ball mill, an attritor, a sand mill, a horizontal media mill, a colloid mill, a roll mill, an ultrasonic homogenizer, a high-pressure homogenizer, or the like, and thus the pigment is finely dispersed to prepare a dispersion. To the dispersion prepared, water and the water-soluble organic solvent are added, and a binder component and other additives and the like are added as necessary to adjust the concentrations to desired ones. The pH may be adjusted by further adding an alkali or the like. Then, various additives such as a surfactant and an antiseptic are added as necessary, and thereby an intended pigment dispersion can be obtained.

In the production method of the present embodiment, the raw material carbon black that is biomass carbon black having a relatively large primary particle size is dispersed so that the raw material carbon black will have a predetermined small particle size. For dispersing the pigment, a mill using media or a high-pressure homogenizer is preferably used. Large particles are crushed into predetermined particle sizes in a dried state by collisions of media or collisions of particles under a high pressure. For a mill using media, the following approaches can be taken for example: decreasing the size of media (pulverization media) to be used; increasing the filling rate of pulverization media; increasing the peripheral speed; increasing the treatment time; and decreasing discharging speed. For a high-pressure homogenizer, the following approaches can be taken for example: increasing the pressure; and increasing the number of passes. After the treatment, coarse particles may be removed by centrifugal separation, filtration with a filter, or other methods.

### <Use of Pigment Dispersion>

The pigment dispersion of the present embodiment is useful as a material to be used for preparing an aqueous inkjet ink, in other words as a colorant for an aqueous inkjet ink. The use of the pigment dispersion of the present embodiment makes it possible to prepare an aqueous inkjet ink that can record a high-density image having excellent color developability and glossiness and that has excellent ejection stability. In addition, the pigment dispersion of the present embodiment can be used not only as an aqueous inkjet ink but also as, for example, an aqueous paint for automobiles and building materials, an aqueous writing material, and a material (colorant) for printing inks such as an aqueous photogravure ink and an aqueous flexographic ink.

### Examples

Hereinafter, the present invention will be described based on Examples, but the present invention is not limited to these Examples. Note that "part(s)" and "%" in Examples and Comparative Examples are on a mass basis unless otherwise noted.

### <Production of Dispersants>

### (Synthesis Example 1)

In a reaction container, 300 parts of diethylene glycol (BDG) was placed and heated to 70°C under nitrogen bubbling. In another container, 120 parts of isobornyl methacrylate (IBXMA), 90 parts of tetrahydrofurfuryl methacrylate (THFMA), 45 parts of lauryl methacrylate (LMA), 45 parts of methacrylic acid (MAA), and 4.5 parts of 2,2'-azobis(2,4-dimethylvaleronitrile) (trade name "V-65," manufactured by FUJIFILM Corporation) (V-65) were placed and mixed to homogenize the resulting mixture, and thus a monomer mixed solution was prepared.

As IBXMA, a methacrylate (biomass degree 71.4%) obtained by reacting methacrylic acid and isoborneol that is obtained from pine resin or turpentine oil was used. As THFMA, an ester (biomass degree 55.5%) of methacrylic acid and tetrahydrofurfuryl alcohol obtained by hydrogenation of furfural that is obtained from corncobs or the like was used. As LMA, an ester (biomass degree 75.0%) of methacrylic acid and lauryl alcohol obtained by hydrogen reduction of lauric acid that is a fraction of an aliphatic acid obtained by hydrolysis of oils and fats such as palm kernel oil and coconut oil was used.

One third of the monomer mixed solution prepared was dropped into the reaction container, then the rest of the monomer mixed solution was further dropped over 2 hours to perform polymerization at 70°C for 8 hours, and thus a liquid containing a polymer was obtained. Part of the liquid obtained was sampled to measure the molecular weight of the polymer by gel permeation chromatography (GPC) using tetrahydrofuran (THF) as a developing solvent. As a result, the number average molecular weight (Mn), polydispersity index (PDI = weight average molecular weight (Mw)/number average molecular weight (Mn)), and rate of polymerization of the polymer were 15,800, 1.98, and about 100% respectively. The rate of polymerization was calculated as follows: part of the liquid obtained was taken on an aluminum dish and dried for 3 hours with a fan dryer set at 150°C to obtain a residue; and the rate of the polymerization was calculated from the residue obtained.

Part of the liquid obtained was sampled, and a mixed solvent of toluene/ethanol (= 1/1 (volume ratio)) was added thereto to homogenize the resulting mixture. After a several drops of a 1% phenolphthalein/ethanol solution were added, titration was performed with a 0.1 N (0.1 mol/L) ethanol solution of potassium hydroxide to measure the acid value of the polymer. As a result, the acid value of the polymer was 97.8 mgKOH/g. To the solution containing the polymer, a mixed liquid of 34.9 parts of a 28% ammonia water (100 mol% based on the contained carboxy groups) and 114.2 parts of water was added to neutralize the solution, and thus an aqueous solution of dispersant D-1 was obtained. The solid content and pH of the aqueous solution obtained were 40.1% and 8.9 respectively.

### (Synthesis Examples 2 to 4 and Comparative Synthesis Examples 1 to 3)

Aqueous solutions of dispersants D-2 to 4 and comparative dispersants HD-1 to 3 were obtained in the same manner as in Synthesis Example 1 except that the materials of the types and amounts (unit: part) shown in Table 1 were used. Physical properties and the like of the dispersants obtained are shown in Table 1. The meanings of abbreviations in Table 1 are as follows.
- MPG: Propylene glycol monomethyl ether
- LSH: Lauryl thiol
- EMA: Ethyl methacrylate (ester of methacrylic acid and biomass ethanol, biomass degree 33.3%)
- StMA: Stearyl methacrylate (ester of methacrylic acid and stearyl alcohol obtained from oils and fats such as palm kernel oil and coconut oil, biomass degree 81.8%)
- ITME: Monoethyl itaconate (monoester of itaconic acid and biomass ethanol, wherein the itaconic acid was obtained by fermenting starch, biomass degree 100%)

**Table 1**

| | Synthesis Example 1 | Synthesis Example 2 | Synthesis Example 3 | Synthesis Example 4 | Comparative Synthesis Example 1 | Comparative Synthesis Example 2 | Comparative Synthesis Example 3 |
|---|---|---|---|---|---|---|---|
| Dispersant | D-1 | D-2 | D-3 | D-4 | HD-1 | HD-2 | HD-3 |
| BDG | 100 | 100 | 50 | 50 | 100 | 100 | 100 |
| MPG | | | 50 | 50 | | | |
| V-65 | 1.5 | 1.5 | 2 | 2 | 0.75 | 1.5 | 1.5 |
| LSH | | | | | | 3 | |
| IBXMA | 40 | 50 | 40 | 50 | 40 | 40 | |
| THFMA | 30 | 20 | 15 | 15 | 30 | 30 | 30 |
| EMA | | | 25 | 10 | | | 40 |
| LMA | 15 | | | | 15 | 15 | 15 |
| StMA | | 10 | | | | | |
| MAA | 15 | 20 | 20 | | 15 | 15 | 15 |
| ITME | | | | 25 | | | |
| Acid value (mgKOH/g) | 97.8 | 97.8 | 130.3 | 88.7 | 97.7 | 97.7 | 97.6 |
| Degree (mol%) of neutralization with 28% ammonia water | 100 | 50 | 50 | 50 | 100 | 100 | 100 |
| Degree (mol%) of neutralization with NaOH | | 50 | 50 | 50 | | | |
| Solid content (%) | 40.1 | 41.3 | 41.5 | 41.3 | 40.2 | 40.2 | 40.2 |
| Mn | 15,800 | 14,300 | 10,900 | 8, 900 | 24,300 | 4, 600 | 16, 900 |
| PDI | 1.98 | 1.89 | 2.10 | 2.36 | 2.16 | 1.76 | 1.89 |
| pH | 8.9 | 9.3 | 9.5 | 9.3 | 8.8 | 8.8 | 8.7 |

### (Synthesis Example 5)

In a reaction container, 283.1 parts of BDG, 59.6 parts of IBXMA, 59.6 parts of THFMA, 2.0 parts of iodine, 3.6 parts of 2,2'-azobis(4-methoxy-2,4-dimethylvaleronitrile) (trade name "V-70," manufactured by FUJIFILM Corporation) (V-70), and 0.1 parts of N-iodosuccinimide (NIS) were placed. The resulting mixture was heated to 45°C under nitrogen bubbling to perform polymerization for 4 hours, and thus a chain A (polymer) was formed. Mn, PDI, and rate of polymerization of the chain A, as measured by sampling part of the polymerization solution, were 4,900, 1.19, and about 100% respectively.

A mixture of 59.5 parts of IBXMA, 59.5 parts of THFMA, and 30.2 parts of MAA was added to the polymerization solution, polymerization was then performed at 45°C for 4 hours to form a chain B, and thus an A-B block copolymer was obtained. Mn, PDI, acid value, and rate of polymerization of the A-B block copolymer were 10,800, 1.26, 73.2 mgKOH/g, and about 100% respectively. In addition, Mn of the chain B (Mn of the whole - Mn of the chain A) was 5,900, and the acid value of the chain B, as calculated from the blending values taking the rate of polymerization into consideration, was 132.0 mgKOH/g. The polymerization solution was cooled to room temperature, and then a solution of 14.0 parts of sodium hydroxide and 125.8 parts of water was added for neutralization to obtain an aqueous solution of dispersant D-5. The solid content and pH of the aqueous solution obtained were 41.6% and 10.2 respectively.

### (Synthesis Examples 6 to 8)

Aqueous solutions of dispersants D-6 to 8 were obtained in the same manner as in Synthesis Example 5 except that the materials of the types and amounts (unit: part) shown in Table 2 were used. Physical properties and the like of the dispersants obtained are shown in Table 2.

**Table 2**

| | | Synthesis Example 5 | Synthesis Example 6 | Synthesis Example 7 | Synthesis Example 8 |
|---|---|---|---|---|---|
| Dispersant | | D-5 | D-6 | D-7 | D-8 |
| BDG | | 283.1 | 141.1 | 145.6 | 141.6 |
| MPG | | | 141.1 | 145.6 | 141.6 |
| Iodine | | 2 | 1.5 | 3.5 | 3.5 |
| V-70 | | 3.6 | 2.9 | 10.3 | 10.3 |
| NIS | | 0.1 | 0.2 | 0.3 | 0.3 |
| Chain A | IBXMA | 59.6 | 60.5 | 60.5 | 90.7 |
| | THFMA | 59.6 | | | 30.3 |
| | EMA | | | 60.5 | |
| | LMA | | 60.5 | | |
| | Mn | 4, 900 | 6, 800 | 3,300 | 3, 400 |
| | PDI | 1.19 | 1.13 | 1.19 | 1.19 |
| Chain B | IBXMA | 59.5 | 54.8 | 54.8 | 54.8 |
| | THFMA | 59.5 | | | |
| | EMA | | 27.4 | 27.4 | 54.8 |
| | LMA | | 27.4 | 27.4 | - |
| | MAA | 30.2 | 46.9 | 46.9 | 38.5 |
| | Mn | 5, 900 | 6,400 | 5,500 | 4, 900 |
| | Acid value (mgKOH/g) | 132.0 | 195.5 | 195.5 | 169.5 |
| Whole | Mn | 10, 800 | 13,200 | 8,800 | 9,300 |
| | PDI | 1.26 | 1.26 | 1.22 | 1.34 |
| | Acid value (mgKOH/g) | 73.2 | 110.1 | 110.2 | 93.3 |
| Degree (mol%) of neutralization with 28% ammonia water | | | 50 | 50 | 50 |
| Degree (mol%) of neutralization with NaOH | | 100 | 50 | 50 | 50 |
| Solid content (%) | | 41.6 | 40.4 | 40.3 | 40.3 |
| pH | | 10.2 | 9.5 | 9.4 | 9.4 |

### <Preparation of Dispersant>

### (Dispersant HD-4)

An aqueous solution (solid content 35.0%) obtained by neutralizing a styrene/maleic anhydride copolymer (styrene/maleic anhydride = 1/1 (molar ratio), Mn 5,000, acid value 470.0 mgKOH/g) with ammonia was prepared as an aqueous solution of dispersant HD-4. This dispersant HD-4 is a dispersant (polymer) that was produced only with petroleum-derived materials, the dispersant (polymer) having a high acid value.

### <Production (1) of Pigment Dispersions>

### (Example 1)

A transparent liquid was obtained by mixing 89.1 parts of the aqueous solution of dispersant D-1 and 337.8 parts of ion-exchanged water. To the solution obtained, 150 parts of carbon black (C.I. Pigment black 6, trade name "PRINTEX Nature," manufactured by Orion Engineered Carbons S.A., number average particle size of primary particles 27 nm, oil absorption 68 cm³/100 g) was added, and the resulting mixture was stirred for 30 minutes using a disper to prepare a mill base. This carbon black is biomass-derived carbon black (raw material carbon black). The pigment was sufficiently dispersed using a horizontal media disperser (trade name "DYNO-MILL 0.6 Liters ECM," manufactured by SHINMARU ENTERPRISES CORPORATION, diameter of zirconia beads: 0.5 mm) at a peripheral speed of 10 m/s with the number of passes of 5. The pigment concentration was adjusted to 18% by adding 256.4 parts of water. The mill base was subjected to centrifugal separation treatment (at 7,500 rpm for 20 minutes) and then filtered with a membrane filter having a pore size of 5 µm. The filtrate was diluted with water to obtain pigment dispersion-1 for inkjet, having a pigment concentration of 14%.

The number average particle size of the pigment in pigment dispersion-1, as measured using a particle size analyzer (trade name "NICOMP 380ZLS-S," manufactured by Particle Sizing Systems LLC.), was 116.6 nm, and it was ascertained that the pigment was finely dispersed. The viscosity and pH of pigment dispersion-1 were 2.7 mPa·s and 8.4 respectively. The viscosity of pigment dispersion-1 is a value at 25°C as measured using an E-type viscometer under a condition of 60 rpm. The number average particle size of the pigment in pigment dispersion-1 after storage at 70°C for 1 week was 116.5 nm and the viscosity thereof was 2.6 mPa·s. Thus, it was ascertained that the storage stability of pigment dispersion-1 was very good.

### (Examples 2 to 8, Comparative Examples 1 to 4, and Reference Examples 1 to 3)

Pigment dispersions-2 to 8 and pigment dispersions-1H to 4H were obtained in the same manner as in Example 1 except that the dispersants of the types shown in Table 3 were used. In addition, pigment dispersins-1S to 3S were obtained in the same manner as in Example 1 except that the dispersants of the types shown in Table 3 were used and that C.I. Pigment Black 7 (trade name "PRINTEX 85," manufactured by Orion Engineered Carbons S.A., number average particle size of primary particles 16 nm, oil absorption 54 cm³/100 g) was used as the carbon black. This carbon black is petroleum-derived carbon black (raw material carbon black). Physical properties of the pigment dispersion obtained are shown in Table 3. The criteria for "Evaluation" in Table 3 are as follows. Note that "A" is acceptable, and "B" and "C" are unacceptable.
A: The pigment is finely dispersed, and even after the pigment dispersion was stored at 70°C for 1 week, the number average particle size of the pigment and the viscosity are not changed significantly.
B: The pigment is finely dispersed, but the viscosity is higher than 4.0 mPa·s, or after the pigment dispersion is stored at 70°C for 1 week, the number average particle size of the pigment and the viscosity changes significantly.
C: The pigment is finely dispersed, but after the pigment dispersion is stored at 70°C for 1 week, the number average particle size of the pigment increases, or the viscosity increases.

**Table 3**

| | Pigment dispersion | Dispersant | Immediately after dispersion | | After storage at 70°C × 1 week | | Evaluation |
|---|---|---|---|---|---|---|---|
| | | | Number average particle size (nm) | Viscosity (mPa·s) | Number average particle size (nm) | Viscosity (mPa·s) | |
| Example 1 | -1 | D-1 | 116.6 | 2.7 | 116.5 | 2.6 | A |
| Example 2 | -2 | D-2 | 116.5 | 2.8 | 111.3 | 2.8 | A |
| Example 3 | -3 | D-3 | 113.2 | 2.8 | 115.3 | 2.8 | A |
| Example 4 | -4 | D-4 | 117.9 | 3.1 | 118.6 | 3.0 | A |
| Example 5 | -5 | D-5 | 100.6 | 2.9 | 98.5 | 2.9 | A |
| Example 6 | -6 | D-6 | 106.6 | 3.1 | 102.0 | 3.1 | A |
| Example 7 | -7 | D-7 | 104.6 | 3.2 | 105.5 | 3.3 | A |
| Example 8 | -8 | D-8 | 109.6 | 2.8 | 108.7 | 2.8 | A |
| Comparative Example 1 | -1H | HD-1 | 169.3 | 3.9 | 179.4 | 4.8 | B |
| Comparative Example 2 | -2H | HD-2 | 170.0 | 2.6 | 196.1 | 3.9 | B |
| Comparative Example 3 | -3H | HD-3 | 143.6 | 2.9 | Gelation | - | C |
| Comparative Example 4 | -4H | HD-4 | 141.6 | 2.4 | Gelation | - | C |
| Reference Example 1 | -1S | D-1 | 106.3 | 2.9 | 99.9 | 2.9 | A |
| Reference Example 2 | -2S | D-5 | 88.6 | 2.9 | 87.9 | 2.8 | A |
| Reference Example 3 | -3S | D-8 | 89.2 | 2.9 | 89.8 | 2.9 | A |

### <Preparation of Inks>

### (Evaluation Examples 1 to 11)

Mixed were 28.7 parts of the pigment dispersion of the type shown in Table 4, 1.5 parts of BDG, 5 parts of 2-pyrrolidone, 20.0 parts of glycerol, 1 part of a surfactant (trade name "Surfynol 465," manufactured by Air Products and Chemicals, Inc.), and 44.8 parts of water. The resulting mixture was stirred sufficiently and then filtered with a membrane filter having a pore size of 5 µm, and thus inkjet inks I-1 to 11 were prepared.

### (Redissolvability)

A drop of each ink was placed on a glass plate. After the ink was dried at 60°C for 24 hours, ion-exchanged water was added to evaluate the redissolvability of the ink according to the following evaluation criteria. The results are shown in Table 4. Note that "A⁺" and "A" are acceptable.
A⁺: The dried ink returns to the state of the dispersion in which neither an aggregate nor a film is formed.
A: Although fine film-like stuff can be observed, the dried ink returns to the original state of the dispersion.
B: Film-like stuff separates and peels.
C: The dried ink does not dissolve.

### (Ejection Performance)

Each ink was filled in a cartridge, and the cartridge was installed in an inkjet printer (trade name "EM-930C," manufactured by Seiko Epson Corporation). A solid image was printed with a printing mode "Photo 720 dpi" on (i) Premium Glossy Photo Paper (PGPP) and (ii) plane paper (trade name "4024," manufactured by Xerox Corporation). The ejection state of the ink during printing was observed to evaluate the ejection performance of the ink according to the following evaluation criteria. The results are shown in Table 4. Note that "A" is acceptable.
A: The ink can be ejected without any problems.
C: The ink splashes halfway through printing, or liquid droplets are not ejected in a straight line.

### (Measurement of Optical Density and 20° Glossiness)

The optical density (OD value) and 20° glossiness of the image recorded on PGPP and the optical density (OD value) of the image recorded on plain paper were measured using an optical densitometer (trade name "Macbeth RD-914," manufactured by Gretag Macbeth LLC.). The results are shown in Table 4. Note that each physical value is the average of five measurements.

### (Rub Resistance)

The surface of the image recorded on PGPP was rubbed with a finger to evaluate the rub resistance of the image according to the following evaluation criteria. The results are shown in Table 4. Note that "A" and "B" are acceptable.
A: The ink does not adhere to the finger.
B: The ink adheres to the finger, but the image is not damaged.
C: A streak occurs to the image.

**Table 4**

| Evaluation Example | Ink | Pigment Dispersion | Redissolvability | Ejection performance | PGPP | | Plain paper | Rub resistance |
|---|---|---|---|---|---|---|---|---|
| | | | | | OD value | 20° Glossiness | OD | |
| 1 | I-1 | -1 | B | A | 1.89 | 42 | 1.09 | A |
| 2 | I-2 | -2 | A | A | 1.87 | 45 | 1.09 | A |
| 3 | I-3 | -3 | A | A | 1.89 | 42 | 1.08 | A |
| 4 | I-4 | -4 | A | A | 1.88 | 43 | 1.08 | A |
| 5 | I-5 | -5 | A⁺ | A | 1.86 | 43 | 1.07 | B |
| 6 | I-6 | -6 | A⁺ | A | 1.94 | 46 | 1.11 | A |
| 7 | I-7 | -7 | A⁺ | A | 1.88 | 47 | 1.13 | A |
| 8 | I-8 | -8 | A⁺ | A | 1.87 | 45 | 1.13 | A |
| 9 | I-9 | -1S | B | A | 2.05 | 50 | 1.15 | A |
| 10 | I-10 | -2S | A⁺ | A | 1.99 | 51 | 1.12 | B |
| 11 | I-11 | -3S | A⁺ | A | 2.20 | 53 | 1.15 | A |

### <Production (2) of Pigment Dispersion>

### (Example 9)

Pigment dispersion-9 was obtained in the same manner as in Example 8 except that bamboo charcoal (trade name "Fine Bamboo Charcoal Powder," manufactured by TRUST COOPERATIVE, number average particle size of primary particles 350 nm) was used as the carbon black (raw material carbon black). Note that the number average particle size of the pigment in the pigment dispersion was measured halfway through and after the production of pigment dispersion-9 (halfway through dispersing (1 to 5 passes), after filtering/centrifugal separation, and after storage at 70°C for 1 week). The results are shown in Table 5.

**Table 5**

| | Number average particle size (nm) |
|---|---|
| 1 pass | 389.3 |
| 2 passes | 298.6 |
| 3 passes | 276.3 |
| 4 passes | 272.3 |
| 5 passes | 269.5 |
| After filtration/centrifugal separation | 258.9 |
| After 70°C × 1 week | 259.6 |

As shown in Table 5, even when the bamboo charcoal having a large primary particle size was used as the raw material carbon black, a pigment dispersion having excellent dispersion stability was able to be obtained in the same manner as in Example 8.

In addition, an inkjet ink was prepared using produced pigment dispersion-9 in the same manner as in Evaluation Examples to perform the evaluations. As a result, the evaluation results of redissolvability, ejection performance, and rub resistance were equal to those for ink I-8 prepared using pigment dispersion-8. The optical density (OD value) and 20° gloss of the image recorded on PGPP were 1.81 and 38.3 respectively. The optical density (OD value) of the image recorded on plain paper was 0.99. As just described above, although the properties of the images were somewhat inferior to the properties of the images recorded with ink I-8, it was ascertained they were within practical use.

### Industrial Applicability

In the pigment dispersion of the present invention, biomass-derived carbon black is finely dispersed at a high level, and therefore the pigment dispersion of the present invention is useful as a material for preparing an aqueous inkjet ink.

## Claims

1. A pigment dispersion to be used for preparing an aqueous inkjet ink, the pigment dispersion comprising:
a pigment;
a dispersant;
a water-soluble organic solvent; and
water, wherein
the pigment is biomass-derived carbon black having an average particle size of 80 to 300 nm in a state of being dispersed in the pigment dispersion,
the dispersant is a polymer at least part of carboxy groups of which are neutralized with an alkali, the polymer comprising: a constituent unit (i) derived from at least any one of (meth)acrylic acid, itaconic acid, and an itaconic acid monoester; and a constituent unit (ii) derived from a biomass-derived (meth)acrylate,
the polymer has an acid value of 50 to 150 mgKOH/g, a number average molecular weight of 5,000 to 20,000, and a polydispersity index (weight average molecular weight/number average molecular weight) of 2.5 or less,
the content of the constituent unit (ii) in the polymer is 50% by mass or more,
the biomass-derived (meth)acrylate comprises: isobornyl methacrylate; and at least one selected from the group consisting of ethyl methacrylate, tetrahydrofurfuryl methacrylate, dodecyl methacrylate, and octadecyl methacrylate, and
the proportion of isobornyl methacrylate in all the biomass-derived (meth)acrylates is 40% by mass or more.

2. The pigment dispersion according to claim 1, wherein the dispersant satisfies the following requirements (1) to (3):
[Requirement (1)]
The dispersant is an A-B block copolymer in which the content of a constituent unit derived from a methacrylic acid-based monomer is 90% by mass or more, the A-B block copolymer comprising: a polymer chain A; and a polymer chain B, and having a number average molecular weight of 5,000 to 20,000 and a polydispersity index of 1.6 or less;
[Requirement (2)]
The polymer chain A is a water-insoluble polymer block comprising 80% by mass or more of a constituent unit (ii-a) derived from a biomass-derived methacrylate and having a number average molecular weight of 3,000 to 10,000 and a polydispersity index of 1.6 or less; and
[Requirement (3)]
The polymer chain B is a polymer block at least part of carboxy groups of which are neutralized with an alkali, the polymer block having an acid value of 100 to 260 mgKOH/g and a number average molecular weight of 3,000 to 10,000 and comprising: a constituent unit (i-b) derived from methacrylic acid; and 40 to 90% by mass of a constituent unit (ii-b) derived from a biomass-derived methacrylate.

3. The pigment dispersion according to claim 1 or 2, wherein the alkali is a combination of ammonia and at least any one of sodium hydroxide and potassium hydroxide.

4. The pigment dispersion according to claim 1 or 2, wherein
the content of the pigment is 10 to 30% by mass,
the content of the dispersant is 2 to 10% by mass,
the content of the water-soluble organic solvent is 30% by mass or less, and
the content of water is 50 to 80% by mass.

5. A method for producing a pigment dispersion to be used for preparing an aqueous inkjet ink, the pigment dispersion comprising: a pigment; a dispersant; a water-soluble organic solvent; and water, wherein
the method comprises a step of dispersing a mixture comprising: biomass-derived raw material carbon black having a number average particle size of primary particles of 20 to 400 nm; the dispersant; the water-soluble organic solvent; and water,
the pigment is biomass-derived carbon black having a number average particle size of 80 to 300 nm in a state of being dispersed in the pigment dispersion,
the dispersant is a polymer at least part of carboxy groups of which are neutralized with an alkali, the polymer comprising: a constituent unit (i) derived from at least any one of (meth)acrylic acid, itaconic acid, and an itaconic acid monoester; and a constituent unit (ii) derived from a biomass-derived (meth)acrylate,
the polymer has an acid value of 50 to 150 mgKOH/g, a number average molecular weight of 5,000 to 20,000, and a polydispersity index (weight average molecular weight/number average molecular weight) of 2.5 or less,
the content of the constituent unit (ii) in the polymer is 50% by mass or more,
the biomass-derived (meth)acrylate comprises: isobornyl methacrylate; and at least one selected from the group consisting of ethyl methacrylate, tetrahydrofurfuryl methacrylate, dodecyl methacrylate, and octadecyl methacrylate, and
the proportion of isobornyl methacrylate in all the biomass-derived (meth)acrylates is 40% by mass or more.
